# EUROPÄISCHE PATENTSCHRIFT

(11) **EP 2 272 246 B1**
(45) Veröffentlichungstag und Bekanntmachung des Hinweises auf die Patenterteilung: **24.01.2018**
(21) Anmeldenummer: 08735230.8
(22) Anmeldetag: 14.04.2008
(51) Int. Cl.: H04M 3/533

(54) **VERFAHREN, SERVER UND KOMMUNIKATIONSENDGERÄT ZUR STEUERUNG EINES NETZGESTÜTZTEN DIENSTES IN EINER KOMMUNIKATIONSANORDNUNG**
METHOD, SERVER, AND COMMUNICATION TERMINAL FOR CONTROLLING A NETWORK-SUPPORTED SERVICE IN A COMMUNICATION ARRANGEMENT
PROCÉDÉ, SERVEUR ET TERMINAL DE COMMUNICATION POUR LA COMMANDE D'UN SERVICE SUR RÉSEAU DANS UN AGENCEMENT DE COMMUNICATION

(43) Veröffentlichungstag der Anmeldung: 12.01.2011
(73) Patentinhaber: Gigaset Communications GmbH, 40549 Düsseldorf (DE)
(72) Erfinder: BOLINTH, Edgar, 41352 Korschenbroich (DE); TÖBBEN, Wilfried, 49624 Löningen (DE)
(74) Vertreter: Michalski Hüttermann & Partner Patentanwälte mbB
(86) Internationale Anmeldenummer: PCT/EP2008/002955
(87) Internationale Veröffentlichungsnummer: WO 2009/127221

(56) Entgegenhaltungen:
- GB-A- 2 319 431
- GB-A- 2 354 396
- US-B1- 6 779 025

## Beschreibung

Die Erfindung betrifft ein Verfahren zur Steuerung eines netzgestützten Dienstes in einer Kommunikationsanordnung gemäß dem Oberbegriff des Patentanspruchs 1, einen Server mit einem netzgestützten Dienst gemäß dem Oberbegriff des Patentanspruchs 11 und ein Kommunikationsendgerät zur Verwendung in einer Kommunikationsanordnung mit einem netzgestützten Dienst gemäß dem Patentanspruch 12.

In Kommunikationsanordnungen, beispielsweise in Telefonanlagen und den zugeordneten Endgeräten, können Dienste entweder "dezentral" in einigen oder allen Kommunikationsendgeräten realisiert werden oder aber "zentral" als netzgestützte Dienste, wobei letztere zumeist in zentralen Servern, Kommunikationsanlagen ("PBX") oder in sonstigen netzseitigen Einrichtungen realisiert sind. So kann beispielsweise jedes Kommunikationsendgerät einen eigenen Anrufbeantworter (auch "Voicemail-Box" genannt) aufweisen, oder aber einen zentralen Anrufbeantworter-Dienst (oft als "Voicemail-Server" bezeichnet) mit ggf. einer Vielzahl an "Voicemail-Boxen" für verschiedene Benutzer bzw. Endgeräte nutzen. Die Verwendung zentraler, netzgesteuerte Dienste wird dabei oft bevorzugt, weil diese auch in den Fällen verfügbar sind, in denen ein Kommunikationsendgerät eines Benutzers nicht erreichbar oder verfügbar ist. So kann beispielsweise ein Anrufer auf einem netzgestützten Anrufbeantworter auch dann eine Nachricht hinterlassen, wenn ein Mobiltelefon eines Benutzers ausgeschaltet ist oder aus anderen Gründen nicht erreichbar ist.

Für die Steuerung, also den Zugriff auf einen Dienst werden bevorzugt Text- oder Grafikbenutzeroberflächen verwendet. So ist es beispielsweise bei DECT-Endgeräten (DECT = Digital Enhanced Cordless Telephone) üblich, dass ein Benutzer den in der DECT-Basisstation befindlichen Anrufbeantworter mittels eines textbasierten "Menüs" bedient, welches in einer Anzeigevorrichtung (Display) des mobilen Endgerätes angezeigt wird. Auf diese Weise ist eine "Navigation" durch verschiedene Funktionen und durch die verschiedenen vorliegenden Nachrichten möglich. In diesem Ausführungsbeispiel wird die textbasierte Benutzeroberfläche durch den in der Basisstation integrierten Anrufbeantworter, also den netzgestützten Dienst, erzeugt und über ein proprietäres Datenformat an das Handset (Mobilteil), also das Kommunikationsendgerät, übermittelt und dort angezeigt. Die Tastatureingaben des Benutzers wiederum werden ebenfalls mittels eines proprietären Übertragungsprotokolls an die Basisstation bzw. den zentralen Anrufbeantworter übermittelt und dort ausgewertet.

Ähnliche Steuerungen sind auch von privaten Nebenstellenanlagen ("PBX", "PABX") bekannt, bei denen ebenfalls zentrale Dienste mittels einer an den jeweiligen Kommunikationsendgeräten angezeigten textbasierten oder graphischen Benutzeroberfläche gesteuert werden. Auch in diesen Fällen macht man sich zu nutze, dass mittels proprietärer Kommunikationsprotokolle die erforderlichen Text- bzw. Graphik-Elemente der Benutzeroberfläche zu dem Kommunikationsendgerät übertragen werden können. Sowohl bei den DECT-Endgeräten als auch bei den privaten Nebenstellenanlagen ist jedoch die Funktion meist auf diejenigen Fälle beschränkt, in denen sowohl der netzgestützte Dienst bzw. der "zentrale Server" als auch die verwendeten Kommunikationsendgeräte von demselben Hersteller stammen bzw. dasselbe proprietäre Kommunikationsprotokoll unterstützen. Im Gegensatz zu den beschriebenen "proprietären" Lösungen werden in öffentlichen Kommunikationsnetzwerken zentrale Dienste bzw. netzgestützte Dienste mit einer "akustischen Bedienerführung" ausgestattet. Während nämlich die Tastatureingaben eines Benutzers zumeist mittels DTMF-Signalisierung, also mittels Tönen, von dem jeweiligen Kommunikationsendgerät zu dem jeweiligen netzgestützten Dienst übermittelt werden können, steht in umgekehrter Übertragungsrichtung meist eine reine Sprachübertragung zur Verfügung, die für eine Übermittlung der für eine textbasierte oder graphische Benutzeroberfläche benötigten Elemente nicht oder nur schlecht geeignet ist.

Die GB 2354396 beschreibt ein Verfahren für den Zugriff auf ein Mailboxsystem, bei dem ein Endgerät über ein Computernetzwerk auf einen Webserver zugreift, um zunächst ein Java-Applet auf das Endgerät herunterzuladen, und um nach anschließender Ausführung dieses Applets auf dem Endgerät ein IP-PSTN Gateway anzusteuern, welches seinerseits das Mailboxsystem ansteuert und die darauf gespeicherten Nachrichten über den IP-PSTN Gateway zurück an das Endgerät überträgt.

Die GB 2319431 beschreibt ebenfalls ein Mailboxsystem, welches durch ein zuvor von einem Endgerät heruntergeladenen und auf diesem Endgerät ausgeführten Java-Applet ansteuern lässt. Auch hier wird ein graphische Benutzerschnittstelle nach Ausführung des Applets auf dem Endgerät durch dieses erzeugt.

Weiterhin beschreibt die US 6,779,025 ein Web-basiertes "unified messages system" basierend auf XML, bei dem ein Server einer anrufenden Partei Benachrichtigungsdienste zur Verfügung stellt, Insbesondere ist darin beschrieben, dass dieser Server bei einer durch diese anrufende Partei gestellten Anfrage ein HTML-Dokument erzeugt, welches neben Medien auch Steuerelemente umfasst, die zur Ansteuerung eines Mailboxsystems verwendet werden können.

Es ist also eine Aufgabe der vorliegenden Erfindung, eine in öffentlichen Kommunikationsnetzwerken funktionsfähige textbasierte oder graphische Benutzeroberfläche zur Steuerung eines netzgestützten Dienstes vorzuschlagen. Die Aufgabe wird durch ein Verfahren gemäß dem Patentanspruch 1, durch einen Server gemäß dem Patentanspruch 11 und durch ein Kommunikationsendgerät gemäß dem Patentanspruch 12 gelöst.

Dabei besteht ein Grundgedanke der Lösung der Aufgabe darin, Protokollelemente des SIP-Protokolls oder eines anderen standardisierten Kommunikationsprotokolls mit einer Beschreibungssprache für textbasierte bzw. graphische Seiten, beispielsweise HTML, XHTML, XHTML-MP ("Extensible Hypertext Mark-up Language Mobile Protocol") oder WML (WAP), zu kombinieren, um die Benutzeroberfläche auf einer Anzeigeeinrichtung eines Kommunikationsendgerätes anzuzeigen.

Die Lösung der Aufgabe sieht dabei ein Verfahren zur Steuerung eines netzgestützten Diensts in einer Kommunikationsanordnung vor, wobei die Steuerung durch zumindest eine Eingabe eines Benutzers an einem Kommunikationsendgerät erfolgt. Dabei wird zuerst seitens des netzgestützten Dienstes eine Benuteroberfläche für den Dienst erstellt, wobei die Benutzeroberfläche als eine Informationsseite (Web-Site) erstellt wird und wobei die für die Steuerung zu verwendbaren Befehle jeweils als Steuerelemente (z.B. Hyperlinks) dargestellt werden. Diese Informationsseite (Web-Site) wird dann zu dem Kommunikationsendgerät übertragen und dort dargestellt, wobei zur Steuerung des Dienstes durch den Benutzer zumindest eines der mit einem Befehl verknüpften Steuerelemente (Hyperlinks) betätigt wird, wodurch eine entsprechende Steuerungsnachricht zu dem netzgestützten Dienstübermittelt wird. Diese Steuerungsnachricht wird seitens des netzgestützten Dienstes empfangen und ausgewertet, wonach der mit dem Steuerelement verknüpfte Befehl ausgeführt wird. Durch dieses Verfahren ist es möglich, für die Steuerung bzw. Bedienung des netzgestützten Dienstes auf dem Kommunikationsendgerät eine textbasierte und/oder graphische Benutzeroberfläche anzuzeigen, welche analog zu der Benutzeroberfläche eines lokal realisierten Dienstes ausgestaltet sein kann. Dabei ist von Vorteil, dass die Befehle als Hyperlinks oder andere Steuerelemente angezeigt werden, weil somit keine proprietären Protokollelemente zur Übermittlung des jeweils ausgewählten Befehles zu dem netzgestützten Dienst erforderlich sind, sondern ein gebräuchlicher "Mechanismus" der Web-Seiten verwendet werden kann.

Die Lösung der Aufgabe sieht weiter den Einsatz eines Servers mit einem netzgestützten Dienst vor, wobei der Server zum Erstellen einer Informationsseite (Web-Site) zur Steuerung des Dienstes eingerichtet ist, und wobei die für die Steuerung zu verwendenden Befehle jeweils als Steuerelemente (Hyperlinks) dargestellt werden. Durch die Verwendung einer Informationsseite (Web-Site), in der die Befehle als Hyperlinks oder ähnliche Steuerelemente ausgebildet sind, kann die Benutzeroberfläche in vielen verschiedenen Arten von Kommunikationsnetzwerken und vielen verschiedenen Kommunikationsendgeräten eingesetzt werden. Dabei wird die in nahezu allen Netzwerken und nahezu allen mobilen Kommunikationsendgeräten vorhandene Möglichkeit benutzt, Hyperlinks o.ä., die eigentlich zur Verzweigung in andere Web-Seiten bzw. "Frames" vorgesehen sind, zur Befehlsübermittlung im Sinne einer Menüsteuerung zu verwenden.

Die Lösung dieser Aufgabe sieht weiter ein Kommunikationsendgerät zur Verwendung in einer Kommunikationsanordnung mit einem netzgestützten Dienst vor, wobei das Kommunikationsendgerät zum Betrieb im Zusammenwirken mit dem vorgenannten Server und zur Ausführung des vorgenannten Verfahrens eingerichtet ist.

Vorteilhafte Ausgestaltungen des erfindungsgemäßen Verfahrens sind in den abhängigen Patentansprüchen 2 bis 10 angegeben. Die dabei beschriebenen Merkmale und Vorteile gelten sinngemäß auch für den erfindungsgemäßen Server und für das erfindungsgemäße Kommunikationsendgerät.

Dabei ergibt sich eine häufige, vielgenutzte Anwendungsmöglichkeit, wenn als der netzgestützte Dienst ein zentraler, netzgestützter Anrufbeantworter verwendet wird.

Es kann eine Vielzahl verschiedener Kommunikationsendgeräte und Übertragungswege verwendet werden, wenn die Informationsseite (Web-Site) als HTML-Seite (HTML = Hypertext Mark-up Language) oder als WML-Seite (WML = Wireless Mark-up Language) des WAP-Protokolls (WAP = Wireless Application Protocol) erstellt wird. Dadurch ist es auch vorteilhaft möglich, zur Übertragung der Web-Site zu dem Kommunikationsendgerät ein öffentliches Kommunikationsnetzwerk zu verwenden. Beispiele für besonders geeignete öffentliche Kommunikationsnetzwerke sind GSM-Netze, IP-Netze (z.B. DSL), UMTS-Netze, GPRS-Verbindungen und HSCSD-Datenverbindungen. Durch die Verwendung der vielfach bereits etablierten WAP-Seiten bzw. HTML-Seiten können auch andere, zukünftige Kommunikationsnetzwerke, die zur Übermittlung dieser Web-Seiten geeignet sind, verwendet werden.

Eine besonders vorteilhafte Anwendung des Verfahrens ergibt sich, wenn als das Kommunikationsnetzwerk eine VoIP-Anordnung gemäß dem ITU-T H.323-Protokoll und insbesondere gemäß dem SIP-Protokoll (SIP = Session Initiation Protocol) gem. RFC 3261 (RFC = Request for Comment der IETF) und anderer RFC's und Standards verwendet wird. Insbesondere ist es dadurch möglich, in SIP-Anordnungen netzgestützte Dienste mit ähnlichen Benutzeroberflächen wie in proprietären (z.B. privaten) Netzwerken anzubieten. Wenn vor dem ersten Schritt eine Benachrichtigung des Benutzers über eine eingegangene Nachricht oder über eine noch nicht zur Kenntnis genommene Nachricht erfolgt, wird dem Benutzer dadurch ein leichter Einstieg in die Benutzung des netzgestützten Dienstes und damit ein leichter Zugang zu der (obersten Ebene der) textbasierten bzw. graphischen Benutzeroberfläche ermöglicht. Dabei wird vorteilhaft für die Benachrichtigung eine Benachrichtigungsmeldung zu dem Kommunikationsendgerät übermittelt, wobei die Benachrichtigungsmeldung einen mit der Informationsseite (Web-Site) verknüpften Hyperlink umfasst. Dadurch wird zusätzlich der Bedienkomfort für den Benutzer verbessert.

Anstelle einer direkten Kommunikation zwischen dem Kommunikationsendgerät und dem netzgestützten Dienst kann dem netzgestützten Dienst auch ein sog. "Proxy-Server" vorgeschaltet werden, der anstelle des netzgestützten Dienstes die Erzeugung der Informationsseite (Web-Site) durchführt und die als Hyperlink- oder Steuerelement-Betätigung ausgelösten Befehle in ein proprietäres Datenformat des jeweiligen netzgestützten Dienstes umsetzt. Dazu kann vorteilhaft ein solcher "Proxy-Server" auch für eine Vielzahl verschiedener netzgestützter Dienste eingesetzt werden. Bezogen auf das Kommunikationsendgerät stellt dann der "Proxy-Server" den netzgestützten Dienst dar, wobei dieser "im Hintergrund" weitere, nämlich die eigentlich zu nutzenden netzgestützten Dienste steuert.

Es ist eine vorteilhafte Ausgestaltung, wenn der netzgestützte Dienst im bevorzugten Anwendungsfall des zentralen "Anrufbeantworters" eine Textumsetzung vorliegender Sprachnachrichten ("Speech-to-Text") vornimmt und die damit gewonnenen Informationen zumindest teilweise auf der als Benutzeroberfläche ausgebildeten Informationsseite (Web-Site) darstellt. Dabei wird dem Benutzer ein höherer Bedienkomfort geboten, weil er zumindest teilweise den Inhalt oder Bezug einer vorliegenden Sprachnachricht visuell dargeboten bekommt.

Ausführungsbeispiele des erfindungsgemäßen Verfahrens werden nachfolgend anhand der Zeichnungen erläutert. Sie dienen gleichzeitig der Erläuterung eines erfindungsgemäßen Servers und eines erfindungsgemäßen Kommunikationsendgerätes.

Dabei zeigen:
- Figur 1: in schematischer Darstellung den Meldungsaustausch zwischen einem Kommunikationsendgerät und einem Server mit einem netzgestützten Dienst,
- Figur 2: ein Beispiel für eine erste Ausgabe auf einer Anzeigeeinrichtung des Kommunikationsendgerätes, und
- Figur 3: ein Beispiel für eine seitens des netzgestützten Dienstes erzeugte Informationsseite (Web-Site) für die Anzeigeeinrichtung des Kommunikationsendgerätes.

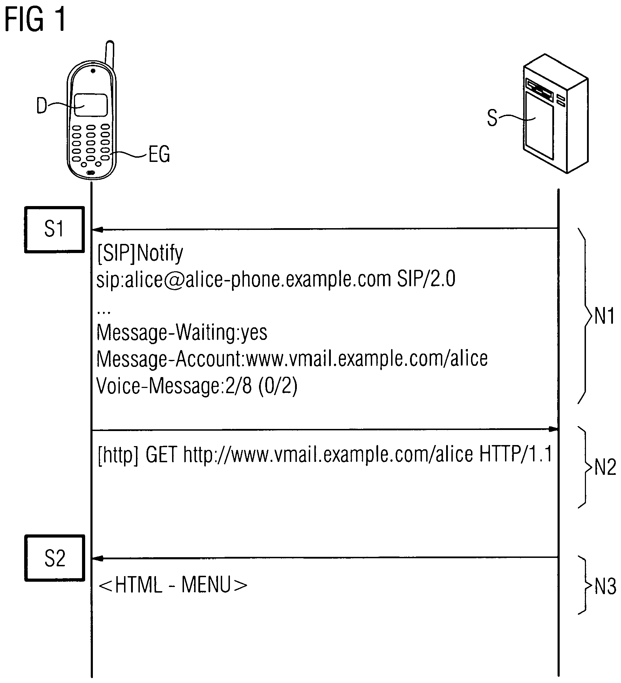

In der Figur 1 sind ein Kommunikationsendgerät EG und ein Server S dargestellt, wobei auf dem Server S ein netzgestützter Dienst bereitgehalten wird. Der netzgestützte Dienst ist im vorliegenden Ausführungsbeispiel ein zentraler, netzgestützter Anrufbeantworter, ein sog. "Voice-Mail-Server". Selbstverständlich kann anstelle des Anrufbeantworter-Dienstes auch ein anderer netzgestützter Dienst verwendet werden; in diesem Fall sind natürlich die Inhalte der im Folgenden beschriebenen Meldungen N1, N2, N3 anders.

Im Folgenden wird davon ausgegangen, dass in dem netzgestützten Anrufbeantworter des Servers S für das Kommunikationsendgerät EG bzw. dessen Benutzer zwei neue Sprachnachrichten eingegangen sind, die von dem Benutzer abgerufen werden können. Zur Benachrichtigung versendet der netzgestützte Dienst eine Benachrichtigungsmeldung N1 an das Kommunikationsendgerät EG. Im vorliegenden Ausführungsbeispiel handelt es sich bei dem Kommunikationsendgerät EG um ein VoIP-Kommunikationsendgerät, welches über ein (hier nicht dargestelltes drahtloses Netzwerk unter Benutzung des SIP-Protokolls (SIP = Session Initiation Protokoll) mit dem (ebenfalls nicht dargestellten) Internet verbunden ist. Dementsprechend ist die Benachrichtigungsmeldung N1 eine sog. SIP-Nachricht, die an das Kommunikationsendgerät EG adressiert ist. Im anhand der Figur 1 dargestellten Ausführungsbeispiel hat das Kommunikationsendgerät EG die SIP-Adresse "alice@alice-phone.example.com". Die Benachrichtigungsmeldung N1 umfasst weiter einige Parameter, unter anderem ein Parameter, der angibt, dass überhaupt eine abrufbare Nachricht vorliegt ("Message-Waiting:Yes"), sowie ein weiterer Parameter über die Anzahl der verfügbaren Nachrichten "Voice Message: 2/8(0/2)". Dies besagt, dass von den insgesamt acht vorliegenden Sprachnachrichten noch zwei ungelesen sind. Ein dritter und für das vorliegende Ausführungsbeispiel sehr wichtiger Parameter der Benachrichtigungsmeldung N1 besteht in dem Link zu einer von dem netzgestützten Dienst (Anrufbeantworter-Dienst auf dem Server S) speziell für den vorliegenden Fall und für das vorliegende Kommunikationsendgerät EG aufgebaute bzw. noch aufzubauende Informationsseite (hier: Web-Site), nämlich der Parameter "Message-Account: www.vmail.example.com/alice".

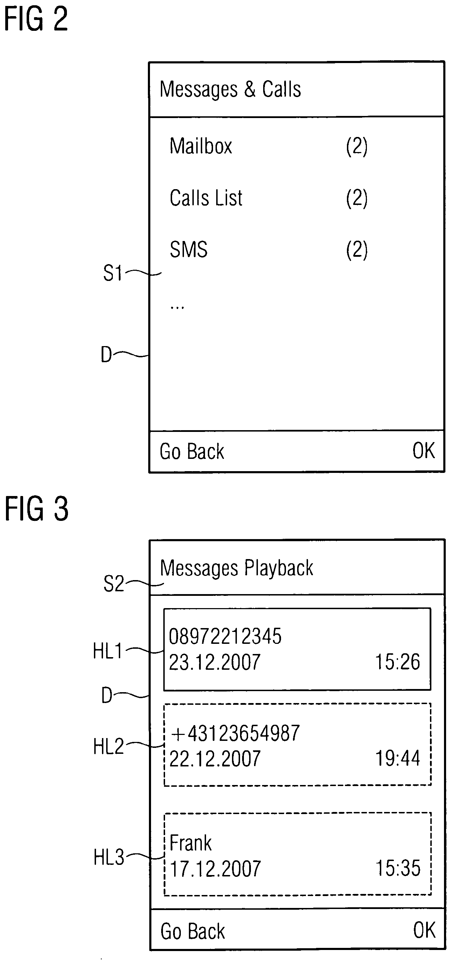

In der Figur 2 ist die lokal erzeugte Anzeigeseite S1 dargestellt, die von dem Kommunikationsendgerät EG nach Eingang der Benachrichtigungsmeldung N1 angezeigt wird. Dieses Seite S1 wird von dem Kommunikationsendgerät EG auf dessen Anzeigeeinrichtung D ("Display") unter einem Menüpunkt mit dem Namen "Messages & Calls" angezeigt. Dabei wird als oberster Menüpunkt "Mailbox(2)" analog zu dem Parameter in der Benachrichtigungsmeldung N1 auf das Vorliegen der abrufbaren Nachrichten von dem Server S bzw. dem dort installierten netzgestützten Dienst ("Anrufbeantworter-Dienst") angezeigt. Dabei ist das Wort "Mailbox(2)" als Steuerelement (hier: Hyperlink) ausgeführt, der mit der URL(Uniform Resource Locator) der seitens des netzgestützten Dienstes erzeugten Informationsseite (Web-Site) verknüpft ist, nämlich mit der Adresse www.vmail.example.com/alice".

Sobald der Benutzer des Kommunikationsendgerätes EG diesen Hyperlink betätigt, wird die in der Figur 1 mit dem Bezugszeichen N2 dargestellte Meldung "GET http://www.vmail.example.com.alice" zu dem netzgestützten Dienst übermittelt. Bei dieser Meldung handelt es sich um eine HTTP-Nachricht; bei der Verwendung eines anderen Kommunikationsprotokolls würde an dieser Stelle selbstverständlich eine der Syntax des anderen Kommunikationsprotokolls entsprechende Meldung übermittelt werden.

Spätestens jetzt wird seitens des netzgestützten Dienstes die Informationsseite (Web-Site) S2 mit der (obersten Ebene der) Benutzeroberfläche des netzgestützten Dienstes erstellt; diese Informationsseite (Web-Site) S2 ist in der Figur 3 schematisch dargestellt. Im vorliegenden Ausführungsbeispiel umfasst die Benutzeroberfläche bei diesem ersten Zugriff eine Liste der abrufbaren Nachrichten, wobei in der Figur 3 drei verschiedene Nachrichten dargestellt sind, die jeweils als Hyperlink HL1, HL2, HL3, also als Steuerelemente, ausgebildet sind. Die an oberster Stelle dargestellte Nachricht mit dem Hyperlink HL1 ist dabei besonders herausgestellt, weil es sich um eine noch nicht abgerufene Nachricht handelt. Anstelle der dargestellten Nachrichten könnten mit der Informationsseite (Web-Site) S2 auch Bedienelemente des Anrufbeantworter-Dienstes dargestellt werden, die beispielsweise einer Tastatur entsprechen, wobei beispielsweise eine "Play"-Taste als ein erster Hyperlink und eine "Stopp"-Taste als ein zweiter Hyperlink dargestellt sind, usw.. Dabei stellen die Hyperlinks HL1, HL2, HL3 besonders geeignete Ausführungsformen der Steuerelemente von Informationsseiten (z.B. Web-Sites) dar; wichtig ist, dass eine Betätigung des jeweiligen Steuerelementes zum Versand einer entsprechenden Meldung (z.B. "GET"-Meldung) an den zu steuernden Server auslöst.

Die seitens des netzgestützten Dienstes derart erstellte Informationsseite (Web-Site) S2 wird nun mittels einer dritten Meldung N3 zu dem Kommunikationsendgerät EG übertragen und dort auf der Anzeigeeinrichtung D dargestellt. Durch Aktivieren oder "Anklicken" eines der Hyperlinks HL1, HL2, HL3 aktiviert nun der Benutzer den entsprechenden Befehl, wobei für jeden der aktivierbaren Hyperlinks HL1, HL2, HL3 eine unterschiedliche (in der Figur 1 nicht dargestellte) Meldung zum Server S und damit zu dem netzgestützten Dienst übermittelt wird, wobei eine solche Meldung dann seitens des netzgestützten Dienstes ausgewertet wird und je nachdem, welcher Link von dem Benutzer aktiviert wurde, der entsprechende Befehl ausgeführt wird.

Anstelle der in der Figur 3 dargestellten "Grunddaten" der verfügbaren Nachrichten (Absender-Rufnummer, Datum, Uhrzeit) können auch andere oder weitere Informationen dargestellt werden. Insbesondere kann eine vorliegende Nachricht mittels eines ebenfalls netzgestützten Dienstes, nämlich einer sog. "Speech-to-Text"-Applikation, in eine Textnachricht umgewandelt werden, wobei danach durch einen sog. "Parser" zumindest eine wichtige Information aus dem Text extrahiert wird (beispielsweise ein Eigenname des Anrufers) und zur Ergänzung der menügestützten Information des Benutzers verwendet wird.

## Patentansprüche

1. Verfahren zur Steuerung eines netzgestützten Dienstes in einer Kommunikationsanordnung,
wobei die Steuerung durch zumindest eine Eingabe eines Benutzers an einem Kommunikationsendgerät (EG) erfolgt,
und wobei
- in einem ersten Schritt seitens des netzgestützten Dienstes eine Benutzeroberfläche für den Dienst erstellt wird, wobei die Benutzeroberfläche als eine Informationsseite (S2) erstellt wird und wobei die für die Steuerung zu verwendenden Befehle jeweils als Steuerelement (HL1, HL2, HL3) dargestellt werden,
- in einem zweiten Schritt diese Informationsseite (S2) zu dem Kommunikationsendgerät übertragen und dort dargestellt wird,
- in einem dritten Schritt zur Steuerung des Dienstes durch den Benutzer zumindest eines der mit einem Befehl verknüpften Steuerelemente (HL1, HL2, HL3) betätigt wird, wobei eine entsprechende Steuerungsnachricht (N2) zu dem netzgestützten Dienst übermittelt wird, und
- in einem vierten Schritt die Steuerungsnachricht (N2) seitens des netzgestützten Dienstes empfangen und ausgewertet wird und der mit dem Steuerelement (HL1, HL2, HL3) verknüpfte Befehl ausgeführt wird,
**dadurch gekennzeichnet, dass**
das Kommunikationsendgerät (EG) und der netzgestützte Dienst mittels eines SIP-Protokolls oder eines anderen standardisierten VoIP-Kommunikationsprotokolls kommunizieren, das die Protokollelemente des SIP-Protokolls oder des anderen standardisierten VoIP-Kommunikationsprotokolls und einer Beschreibungssprache für textbasierte bzw. graphische Seiten aufweist, um die Benutzeroberfläche auf einer Anzeigeeinrichtung des Kommunikationsendgerätes anzuzeigen.

2. Verfahren nach Patentanspruch 1,
**dadurch gekennzeichnet,**
**dass** als der netzgestützte Dienst ein zentraler Anrufbeantworter verwendet wird.

3. Verfahren nach einem der vorherigen Patentansprüche,
**dadurch gekennzeichnet,**
**dass** die Informationsseite (S2) als HTML-Seite, XHTML-Seite oder als WML-Seite erstellt wird.

4. Verfahren nach einem der vorherigen Patentansprüche,
**dadurch gekennzeichnet,**
**dass** die Übertragung der Informationsseite (S2) zu dem Kommunikationsendgerät (EG) mittels eines öffentlichen Kommunikationsnetzwerkes durchgeführt wird.

5. Verfahren nach Patentanspruch 4,
**dadurch gekennzeichnet,**
**dass** als das öffentliche Kommunikationsnetzwerk ein GSM-Netzwerk, ein UMTS-Netzwerk, ein GPRS-Netzwerk oder ein HSCSD-Netzwerk verwendet wird.

6. Verfahren nach Patentanspruch 4,
**dadurch gekennzeichnet,**
**dass** als das öffentliche Kommunikationsnetzwerk ein Datennetzwerk für eine VoIP-Anordnung gemäß des SIP-Protokolls verwendet wird.

7. Verfahren nach einem der vorherigen Patentansprüche,
**dadurch gekennzeichnet,**
**dass** vor dem ersten Schritt eine Benachrichtigung des Benutzers über eine eingegangene Nachricht oder über eine noch nicht zur Kenntnis genommene Nachricht erfolgt.

8. Verfahren nach Patentanspruch 7,
**dadurch gekennzeichnet,**
**dass** zur Benachrichtigung eine Benachrichtigungsmeldung (N1) zu dem Kommunikationsendgerät (EG) übermittelt wird, wobei die Benachrichtigungsmeldung ein mit der Informationsseite (S2) verknüpftes Steuerelement (HL1, HL2, HL3) umfasst.

9. Verfahren nach einem der vorherigen Patentansprüche,
**dadurch gekennzeichnet,**
**dass** als der netzgestützte Dienst ein Proxy-Server verwendet wird, der mittels der empfangenen Befehle einen weiteren netzgestützten Dienst mit einer zur steuernden Anwendung steuert.

10. Verfahren nach einem der Patentansprüche 2 bis 9,
**dadurch gekennzeichnet,**
**dass** der netzgestützte Dienst einen Speech-to-Text-Dienst umfasst, wobei mittels dieses Dienstes Zusatzinformationen über eine vorliegende Nachricht ermittelt werden und wobei diese Zusatzinformationen mittels der zu dem Kommunikationsendgerät (EG) übertragenen Informationsseite (S2) angezeigt werden.

11. Server (S) mit einem netzgestützten Dienst,
wobei der Server (S) zum Erstellen einer Informationsseite (S2) zur Steuerung des Dienstes eingerichtet ist, wobei die für die Steuerung zur verwendenden Befehle jeweils als Steuerelemente (HL1, HL2, HL3) dargestellt werden,
**dadurch gekennzeichnet, dass**
der Server (S) zur Kommunikation mittels eines SIP-Protokolls oder eines anderen standardisierten VoIP-Kommunikationsprotokolls ausgeführt ist, das die Protokollelemente des SIP-Protokolls oder des anderen standardisierten VoIP-Kommunikationsprotokolls und einer Beschreibungssprache für textbasierte bzw. graphische Seiten aufweist, um eine Benutzeroberfläche auf einer Anzeigeeinrichtung eines Kommunikationsendgerätes anzuzeigen.

12. Kommunikationsendgerät (EG) zur Verwendung in einer Kommunikationsanordnung mit einem netzgestützten Dienst, **dadurch gekennzeichnet,**
**dass** das Kommunikationsendgerät (EG) zum Betrieb mit einem der Verfahren gemäß der Patentansprüche 1 bis 10 eingerichtet ist.

## Claims

1. A method for controlling a network-supported service in a communication arrangement,
wherein the control is performed by at least one input of a user on a communication terminal (EG), and wherein
- in a first step, on the network-supported service side, a user surface is created for the service, wherein the user surface is created as an information page (S2), and wherein the commands to be used for the control are each shown as a control element (HL1, HL2, HL3),
- in a second step this information page (S2) is transmitted to the communication terminal and is shown there,
- in a third step, for control of the service by the user, at least one of the control elements (HL1, HL2, HL3) linked to a command is actuated, wherein a corresponding control message (N2) is transmitted to the network-supported service, and
- in a fourth step the control message (N2) is received and evaluated on the network-supported service side and the command linked to the control element (HL1, HL2, HL3) is executed,
**characterised in that**
the communication terminal (EG) and the network-supported service communicate by means of an SIP protocol or another standardised VoIP communication protocol, which comprises the protocol elements of the SIP protocol or of the other standardised VoIP communication protocol and a description language for text-based and/or graphical pages, in order to display the user surface on a display device of the communication terminal.

2. The method according to claim 1,
**characterised in that**
a central answering machine is used as the network-supported service.

3. The method according to either one of the preceding claims,
**characterised in that**
the information page (S2) is created as an HTML page, XHTML page, or as a WML page.

4. The method according to any one of the preceding claims,
**characterised in that**
the information page (S2) is transmitted to the communication terminal (EG) by means of a public communication network.

5. The method according to claim 4,
**characterised in that**
a GSM network, a UMTS network, a GPRS network, or an HSCSD network is used as public communication network.

6. The method according to claim 4,
**characterised in that**
a data network for a VoIP arrangement according to the SIP protocol is used as public communication network.

7. The method according to any one of the preceding claims,
**characterised in that**
before the first step, a notification is provided to the user via an incoming message or via a message that has not yet been noted.

8. The method according to claim 7,
**characterised in that**
for notification, a notification message (N1) is transmitted to the communication terminal (EG), wherein the notification message comprises a control element (HL1, HL2, HL3) linked to the information page (S2).

9. The method according to any one of the preceding claims,
**characterised in that**
a proxy server is used as the network-supported service, which proxy server, by means of the received commands, controls a further network-supported service with an application to be controlled.

10. The method according to any one of claims 2 to 9,
**characterised in that**
the network-supported service comprises a speech-to-text service, wherein, by means of this service, additional information regarding a present message is determined, and wherein this additional information is displayed by means of the information page (S2) transmitted to the communication terminal (EG).

11. A server (S) with a network-supported service, wherein the server (S) is designed to create an information page (S2) for controlling the service, wherein the commands to be used for the control are each shown as control elements (HL1, HL2, HL3),
**characterised in that**
the server (S) is designed for communication by means of an SIP protocol or another standardised VoIP communication protocol, which comprises the protocol elements of the SIP protocol or of the other standardised VoIP communication protocol and a description language for text-based and/or graphical pages, in order to display a user surface on a display device of a communication terminal.

12. A communication terminal (EG) for use in a communication arrangement with a network-supported service,
**characterised in that**
the communication terminal (EG) is designed for operation with one of the methods according to claims 1 to 10.

## Revendications

1. Procédé de commande d'un service par réseau protégé dans un agencement de communication,
dans lequel la commande est effectuée par au moins une entrée d'un utilisateur sur un appareil émetteur de communication (EG), et dans lequel
- dans une première étape, du côté du service par réseau protégé, une surface d'utilisateur est mise en place pour le service, où la surface d'utilisateur est mise en place sous forme d'une page d'information (S2) et où les ordres employés pour la commande sont représentés respectivement sous forme d'éléments de commande (HL1, HL2, HL3),
- dans une deuxième étape, cette page d'information (S2) est transmise vers l'appareil émetteur de communication et y est représentée,
- dans une troisième étape, pour la commande du service par l'utilisateur, au moins un des éléments de commande (HL1, HL2, HL3) relié avec une commande est actionné, où une information de commande (N2) correspondante est transmise vers le service par réseau protégé, et
- dans une quatrième étape, l'information de commande (N2) est réceptionnée du côté du service par réseau protégé et est évaluée et la commande reliée avec l'élément de commande (HL1, HL2, HL3) est exécutée,
**caractérisé en ce que**
l'appareil émetteur de communication (EG) et le service par réseau protégé communiquent au moyen d'un protocole SIP ou d'un autre protocole de communication voix sur IP, VoIP, normalisé, qui présente les éléments de protocole du protocole SIP ou de l'autre protocole de communication VoIP normalisé et un langage de description pour des pages basées sur du texte, respectivement, graphiques, afin d'afficher la surface d'utilisateur sur un dispositif d'affichage de l'appareil émetteur de communication.

2. Procédé selon la revendication 1,
**caractérisé en ce**
**qu'**en tant que service par réseau protégé, un répondeur central est employé.

3. Procédé selon l'une des revendications précédentes,
**caractérisé en ce**
**que** la page d'information (S2) est établie sous la forme d'une page HTML, d'une page XHTML ou d'une page WML.

4. Procédé selon l'une des revendications précédentes,
**caractérisé en ce**
**que** la transmission de la page d'information (S2) est effectuée vers l'appareil émetteur de communication (EG) au moyen d'un réseau de communication public.

5. Procédé selon la revendication 4,
**caractérisé en ce**
**qu'**en tant que réseau de communication public, un réseau GSM, un réseau UMTS, un réseau GPRS ou un réseau HSCSD est employé.

6. Procédé selon la revendication 4,
**caractérisé en ce**
**qu'**en tant que réseau de communication public, un réseau de données pour un agencement VoIP selon le protocole SIP est employé.

7. Procédé selon l'une des revendications précédentes,
**caractérisé en ce**
**qu'**avant la première étape, il y a une notification de l'utilisateur concernant une information rentrée ou une information dont il n'a pas encore eu connaissance.

8. Procédé selon la revendication 7,
**caractérisé en ce**
**que** pour la notification, un message de notification (N1) est transmis vers l'appareil émetteur de communication (EG), où le message de notification comprend un élément de commande (HL1, HL2, HL3) relié avec la page d'information (S2).

9. Procédé selon l'une des revendications précédentes,
**caractérisé en ce**
**qu'**en tant que service par réseau protégé, un serveur proxy est employé qui commande au moyen des ordres reçus un autre service par réseau protégé avec une application à commander.

10. Procédé selon l'une des revendications 2 à 9,
**caractérisé en ce**
**que** le service par réseau protégé comprend un service de conversion de paroles en texte, où, au moyen de ce service, des informations complémentaires concernant une information présente sont transmises et où ces informations complémentaires sont affichées au moyen de la page d'information (S2) transmise vers l'appareil émetteur de communication (EG).

11. Serveur (S) avec un service par réseau protégé,
où le serveur (S) est conçu pour l'établissement d'une page d'information (S2) pour la commande du service, où les ordres employés pour la commande sont représentés sous forme d'éléments de commande (HL1, HL2, HL3),
**caractérisé en ce que**
le serveur (S) est conçu pour la communication au moyen d'un protocole SIP ou d'un autre protocole de communication VoIP normalisé, et présente un langage de description pour des pages basées sur du texte, respectivement, graphiques, afin d'afficher une surface d'utilisateur sur un dispositif d'affichage d'un appareil émetteur de communication.

12. Appareil émetteur de communication (EG) pour un emploi dans un agencement de communication avec un service par réseau protégé,
**caractérisé en ce**
**que** l'appareil émetteur de communications (EG) est conçu pour un fonctionnement avec un des procédés selon les revendications 1 à 10.
